# DEMANDE DE BREVET EUROPEEN

(11) **EP 1 530 276 A2**
(43) Date de publication de la demande: **11.05.2005**
(21) Numéro de dépôt: 04380212.3
(22) Date de dépôt: 28.10.2004
(51) Int. Cl.: H02G 3/08

(54) **Boîtier à encastrer pour y loger des dispositifs électriques dans des installations encastrées**

(30) Priorité: 29.10.2003 ES 200302450 U
(71) Demandeur: Simon, S.A., 08013 Barcelona (ES)
(72) Inventeur: Aubert Capella, Joaquin, 08107 Barcelona (ES)
(74) Mandataire: Espiell Volart, Eduardo Maria

(57) **Abrégé**

Boîtier comprenant un corps ouvert (1) par une face prismatique quadrangulaire disposant à deux de ses coins de saillies cylindriques (12) avec des creux également cylindriques et ouverts au devant, tandis qu'aux deux coins opposés sont disposées des saillies cylindriques massives (14), ayant le même diamètre que le diamètre intérieur du creux des saillies opposées, de sorte que les saillies creuses du boîtier puissent s'emboîter sur les saillies massives d'un boîtier contigu identique en s'accouplant par coulissement en descendant de haut en bas. Il y a des rainures rectangulaires (8) coincidantes sont situées, l'une d'elles pourvue d'un talon (9) du genre coin et l'autre ayant un talon plat horizontal (10), de sorte qu'ils fassent l'office d'encastrement et de butée. Le boîtier dispose d'un complément, une sorte de pont (16), qui se positionne emboîté dans l'espace laissé libre (16b) lorsqu'il fait que les parois contiguës des boîtiers déjà couplés se détachent.

## Description

Ce brevet concerne un boîtier à encastrer pour y loger des dispositifs électriques tels que des interrupteurs, des socles d'interrupteurs et assimilés, ainsi que des barrettes de connexion et analogues, destiné précisément à son utilisation dans des installations encastrées et essentiellement caractérisé en ce qu'il peut être accouplé dans le cas où cela intéresserait sur le champs à d'autres boîtiers identiques, en disposant d'une série d'éléments complémentaires garantissant l'effectivité aussi bien de l'encastrement du boîtier que de l'accouplement à l'installation conjointe de ces boîtiers.

Pour les installations électriques, notamment celles de tension basse, pour des habitations, des commerces, des bureaux, etc., il faut une diversité d'éléments qui, en plus de rendre l'assemblage plus aisé des divers dispositifs électriques, garantisse le respect de la réglementation en vigueur en matière d'installations électriques et, notamment, dans tout ce qui concerne la sécurité.

Par ailleurs, l'objectif et le but des études et des designs de ces composants des installations est de les rendre versatiles, facile à installer et ayant des possibilités d'utilisation dans diverses réalisations, afin d'obtenir une économie de main d'oeuvre à utiliser, ainsi que dans la diversité des éléments à fabriquer et à stocker.

Le boîtier à encastrer pour y loger les dispositifs électriques qui seront décrits et qui sera utilisé pour les installations encastrées, offre une série de particularités de design et de confection qui en font un élément à utiliser dans ce genre d'installations, ayant un taux d'économie et d'effectivité réellement frappant, comme on peut voir dans la description ci-après.

Le boîtier objet de cette invention est essentiellement caractérisé en ce qu'il est pourvu sur ses arêtes latérales d'éléments à configuration mâle-femelle, permettant l'accouplement par coulissement avec un autre boîtier identique contigu, ainsi que l'action inverse pour le dégager, sans besoin de pression et sans déformation de ces éléments.

Il est également caractérisé en ce qu'il possède diverses zones sur ses faces latérales susceptibles d'être facilement dégagées afin de permettre le passage libre entre les divers boîtiers accouplés.

Il est de même essentiellement caractérisé en ce qu'il est possible de placer dans la zone d'accouplement de deux boîtiers contigus, des éléments complémentaires renforçant cette zone, ainsi qu'un complément de continuité des bases des deux boîtiers accouplés, qui sera placé dans la zone d'accouplement, en fournissant une continuité totale à la surface supérieure des bases et, finalement, optionnellememt de placer un couvercle de fermeture du boîtier à sa partie supérieure dont le but est d'éviter la pénétration du matériau qui sera employé pour plâtrer le mur, pour fixer le boîtier une fois qu'il a été placé dans le creux où il restera encastré, en évitant ainsi que les trous ou les têtes des vis de fixation des bagues supports de montage des mécanismes électriques soient bouchés.

Afin d'exposer dans tous les détails les caractéristiques qui ont été énoncées du boîtier pouvant être accouplé, objet de ce brevet, une série de dessins est annexée à cette description dans lesquels une mise en oeuvre de ce boîtier pouvant être accouplé a été représentée à titre d'exemple non limitatif.

Dans ces dessins,
La figure 1 est une vue en perspective de deux boîtiers, conformément à l'objet de l'invention, agencés dans la position qui montre la descente de l'un d'eux, pour s'accoupler par coulissement;
La figure 2 est une vue en perspective des deux boîtiers déjà accouplés et l'on note qu'ils sont tous les deux identiques et qu'aucune partie des faces des boîtiers ne s'est détachée;

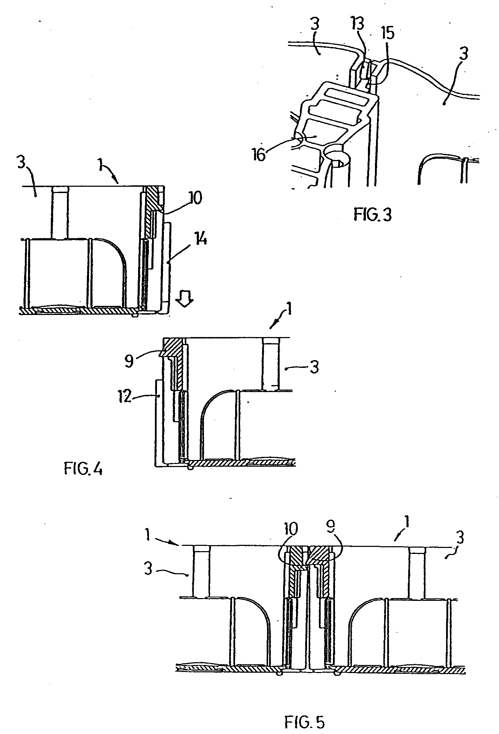

La figure 3 est un détail à une plus grande échelle et en perspective de la région d'union par accouplement des deux boîtiers, montrant les éléments intervenant dans cet accouplement par la zone latérale des boîtiers;
La figure 4 est un détail, en section latérale, de deux boîtiers situés, éclatés, dans la position préalable à son accouplement, montrant les éléments d'accouplement de la zone frontale des boîtiers;
La figure 5 est un détail en coupe correspondant à la figure précédente, mais avec les deux boîtiers déjà accouplés;
La figure 6 est une vue en perspective du dessous, semblable à la figure 2, avec les deux boîtiers déjà accouplés montrant les arêtes latérales, dans la configuration dans laquelle les éléments d'accouplement sont femelles;
La figure 7 est une vue en perspective, semblable à celle de la figure 2, montrant les boîtiers accouplés et avec leurs faces latérales contiguës déjà détachées, un espace commun et unique restant, formé par ces boîtiers;

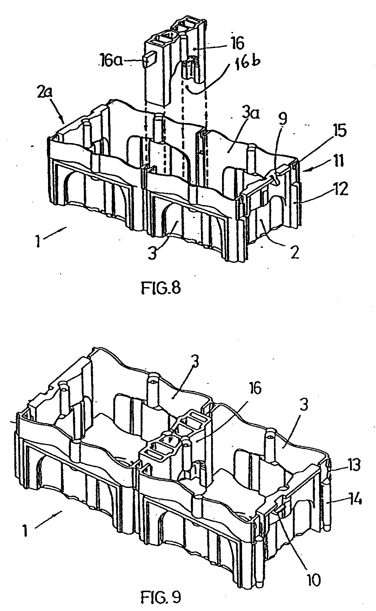

La figure 8 est un dessin en perspective des deux boîtiers de la figure précédente, montrant l'agencement de la pièce complémentaire intermédiaire, située éclatée, une pièce qui sera placée dans la zone de juxtaposition des deux boîtiers;
La figure 9 est également un dessin en perspective, cette pièce complémentaire intermédiaire déjà placée à sa place, conformément à la figure précédente;
La figure 10 est un dessin des deux boîtiers accouplés, en perspective et vus du dessous, montrant l'agencement d'une autre pièce complémentaire qui donnera une continuité aux deux bases, cette pièce est dessinée éclatée; et
Finalement, la figure 11 est le dessin d'un seul boîtier de l'invention, en perspective, le couvercle étant positionné éclaté, qui fermera le boîtier par sa sortie supérieure.

Conformément auxdits dessins, le boîtier à encastrer pour y loger des dispositifs électriques, ayant un design à forme spéciale pour son utilisation dans des installations encastrées ainsi que pour être accouplé latéralement avec d'autres boîtiers identiques, consiste en un corps prismatique quadrangulaire (1) ouvert par une face à parois latérales égales de deux en deux (2) et (3), offrant une base plate et horizontale (4) pourvue à sa partie centrale d'un début de perforation ou de poinçonnage (5) qui permettra de facilement détacher cette zone, de préférence circulaire, pour un facile accès à l'intérieur.

Les parois latérales (2) et (2a) possèdent sur leur bord supérieur, une zone gauchie (2b), avec sa face supérieure plate (6), où se trouve avec sa moitié, un dégauchissement cylindrique creux (7) pour le passage des vis de fixation opportunes, non représentées dans les dessins ainsi qu'une rainure rectangulaire (8) coïncidant en position avec la rainure de l'autre côté (8a), de sorte que lorsque les deux boîtiers (1) sont accouplés, les deux rainures coïncideront, la première possédant un talon de la face supérieure incliné (9) et une base plate, semblable à un coin, tandis que la deuxième possède un talon horizontal plat (10), tout cela disposé de sorte que le talon en coin (9) sera appuyé sur le talon horizontal (10) après avoir coulissé sur ce talon (10) et une fois qu'il l'aura dépassé il servira de butée pour limiter le déplacement dans l'accouplement.

Dans les deux autres faces latérales (3) et (3a), à bord supérieur gauchi, se trouvent également les dégauchissements cylindriques creux correspondants (7).

Les coins (11) de la face ou paroi latérale (2) pourvue du talon à forme de coin (9) possèdent des saillies cylindriques (12) ayant des creux cylindriques intérieurs et ouverts au devant, qui commencent à la base du boîtier et leur hauteur est un peu plus petite que celle du latéral du boîtier (1).

Les coins de la face opposée (2a) où est situé le talon plat horizontal (10) possède tout d'abord d'autres talons à forme de coin (13) et au-dessous et ensuite, des saillies cylindriques massives (14) ayant le même diamètre que le diamètre intérieur des saillies (12) des coins opposés (11). Ces saillies (14) ont la même hauteur que celle des saillies creuses (12) et elles sont situées de sorte qu'elles pourront être introduites dans les saillies creuses (12) en s'y accouplant par coulissement entre elles, de sorte que les deux boîtiers resteront parfaitement fixés l'un à l'autre, accouplés tout simplement par l'action de ce coulissement, une action qui, inversée, entraînera le dégagement des boîtiers.

De petits talons (15) situés au-dessus des saillies cylindriques creuses (12) près du bord supérieur du boîtier (1) et dans la zone de la face frontale, serviront de butée empêchant le coulissement excessif, ils sont complétés par les petits talons (13) et le rebord latéral (11), situés dans la zone frontale opposée, en garantissant égaiement entre eux la fixation d'une pièce pont (16) des talons latéraux (16a) coopérant pour obtenir la raideur nécessaire et en obtenant avec tout cela un accouplement parfait entre les boîtiers (1) et également du pont (16) sur ceux-ci.

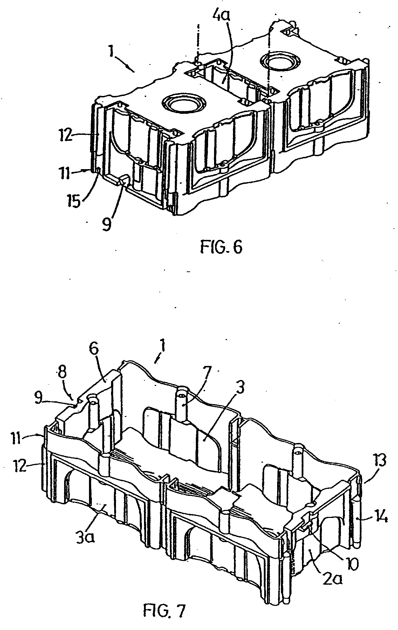

Frontalement, et comme montre les figures 4 et 5, ce sont les talons (9) et (10) correspondant aux faces frontales opposées qui garantissent la fixation de cet accouplement.

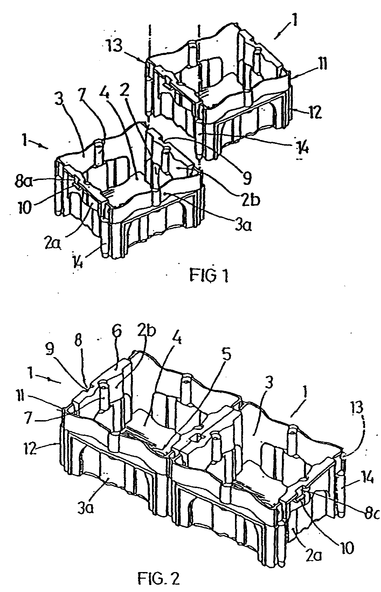

Les boîtiers étant accouplés comme montrent les figures 2 et 6, l'espace intérieur des deux reste séparé et il pourra être unifié, si on le souhaite, par l'élimination des faces latérales (2) et (2a) coincidantes, comme on peut voir dans la figure 7.

Dès que ces parois sont éliminées, et afin de permettre que les boîtiers (1) reviennent à leur structure initiale, le cas échéant, on disposera d'un élément accouplable par emboîtement, une sorte de pont (16), dont la zone inférieure ouverte (16b) permettra la communication de l'intérieur des boîtiers accouplés.

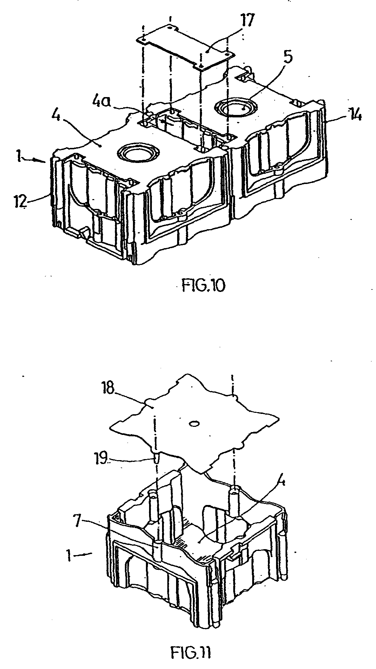

À la partie inférieure des deux boîtiers accouplés et entre leurs bases respectives plates horizontales (4), il est un espace ouvert (4a) qui doit être couvert pour éviter l'entrée ou la sortie involontaire de plâtre, ciment ou d'objets divers. L'élément ou couvercle d'accouplement (17) conformément à la figure 10, à pourtour identique à celui de l'espace ouvert (4a), donnera une continuité totale aux bases, tout en fermant l'intérieur de l'espace constitué entre les deux boîtiers (1) lorsqu'ils sont accouplés.

Dans l'utilisation pratique du boîtier (1) objet de cette invention, pour son installation complètement encastrée et en y ayant logé à l'intérieur des dispositifs électriques qui ne dépassent pas ni ne doivent pas être accessibles de l'extérieur, tels que des barrettes d'accouplement, des raccordements et assimilés, la face supérieure du boîtier (1) pourra être fermée parfaitement et facilement au moyen d'un couvercle (18) constitué par une lame lisse et plate, à contour identique à celui de l'intérieur gauchi des quatre faces latérales (2) et (3) du boîtier (1).

Par ailleurs, lorsque le boîtier à encastrer (1) est déjà placé à l'intérieur du creux ménagé dans le mur, où son installation encastrée, le cas échéant, le plâtrage vont se faire, ce couvercle (18) empêchera que le plâtre pénètre et bouche les trous (7) que le boîtier (1) possède.

Les pivots tronconiques (19) que le couvercle (18) possède, permettront de le fixer, lorsqu'ils seront introduits dans les trous des dégauchissements cylindriques (7).

L'objet de cette invention étant suffisamment décrit, il faut indiquer que toute variation des dimensions, formes et aspect extérieurs et type de matériaux employés pour la mise en oeuvre du boîtier accouplable n'affectera en rien l'esprit de l'invention qui est décrite, résumée dans les revendications annexées.

## Revendications

1. Boîtier à encastrer pour y loger des dispositifs électriques dans des installations encastrées, **caractérisé en ce qu'**il comprend un corps ouvert (1) par une face prismatique quadrangulaire disposant à deux de ses coins des saillies cylindriques (12) avec des creux également cylindriques et ouverts au devant, tandis qu'aux deux coins opposés sont disposées des saillies cylindriques massives (14), ayant le même diamètre que le diamètre intérieur du creux des saillies opposées, tout cela de sorte que les saillies creuses du boîtier puissent s'emboîter sur les saillies massives d'un boîtier contigu identique en s'accouplant par coulissement les premiers sur les derniers, en descendant de haut en bas, les boîtiers restant ainsi parfaitement et complètement couplés (1) en permettant également qu'une action de coulissement en sens inverse entraîne le dégagement immédiat de ces boîtiers, sans aucun bris ni déformation.

2. Boîtier à encastrer pour y loger des dispositifs électriques dans des installations encastrées conformément à la revendication précédente, **caractérisé en ce que** sur le bord supérieur des faces frontales contiguës qui seront positionnées ensemble lorsque deux ou plusieurs boîtiers seront accouplés des rainures rectangulaires (8) coincidantes sont situées, l'une d'elles pourvue d'un talon (9) du genre coin et l'autre ayant un talon plat horizontal (10), de sorte qu'ils fassent l'office d'encastrement et de butée dans le coulissement de la saillie creuse (12) sur la saillie massive, en assurant l'accouplement des boîtiers lorsque ces talons (9,10) sont engagés l'un sur l'autre, en disposant également sur les saillies massives et sur le bord supérieur, de talons (13) limitant également le coulissement et garantissant la fixation d'un pont intermédiaire complémentaire.

3. Boîtier à encastrer pour y loger des dispositifs électriques dans des installations encastrées, conformément à la revendication 2 précédente, **caractérisé en ce qu'**il dispose d'un complément, une sorte de pont (16), qui se positionne emboîté dans l'espace laissé libre (16b) lorsqu'il fait que les parois contiguës des boîtiers déjà couplés se détachent afin de renforcer la structure de l'ensemble et garantir sa stabilité, en laissant l'espace de passage entre les intérieurs des deux boîtiers accouplés.

4. Boîtier à encastrer pour y loger des dispositifs électriques dans des installations encastrées, conformément à la revendication 1, **caractérisé en ce qu'**il dispose d'une pièce d'accouplement, à forme de couvercle (14), ayant un pourtour identique à l'espace laissé libre entre les bases lorsqu'on accouple deux boîtiers contigus et qui va couvrir cet espace en donnant une continuité aux bases unies et en évitant la sortie ou l'entrée involontaire d'éléments étrangers.

5. Boîtier à encastrer pour y loger des dispositifs électriques dans des installations encastrées, conformément à la revendication 1, **caractérisé en ce qu'**il dispose complémentairement d'un couvercle pour la fermeture de sa partie supérieure (18), pouvant être parfaitement emboîtée dans le pourtour gauchi des ses faces latérales, un couvercle pourvu de deux goujons qui s'emboîtent dans les dégauchissements situés pour cela sur les faces latérales, couvrant les dispositifs électriques qui y sont installés et en évitant l'entrée de tout objet étranger, tel que du plâtre ou du replâtrage de la surface du mur.
